# EUROPEAN PATENT APPLICATION

(11) **EP 3 422 602 A1**
(43) Date of publication of application: **02.01.2019**
(21) Application number: 17178156.0
(22) Date of filing: 27.06.2017
(51) Int. Cl.: H04B 10/032, H04J 14/02, H04B 10/61

(54) **DATA TRANSMISSION METHOD AND TRANSCEIVER FACILITATING THE SWITCHING OF FREQUENCY BANDS FOR OPTICAL CHANNELS**

(71) Applicant: Xieon Networks S.à r.l., 2633 Senningerberg (LU)
(72) Inventor: Schimpe, Robert, 85521 Riemerling / Hohenbrunn (DE)
(74) Representative: Lucke, Andreas

(57) **Abstract**

Disclosed herein is a method of transmitting data in an optical network (10, 100) from a first location to a second location, as well as a corresponding receiver unit and transceiver. The method comprises the following steps:
modulating a same data signal on first and second carriers having first and second wavelengths, respectively, to generate first and second optical signals carrying the same information,
transmitting said first and second optical signals from said first location to said second location through said optical network,
coherent receiving of a selected one of said first and second optical signals by means of a coherent receiver (29) located at said second location, wherein said coherent receiving comprises the following steps:
receiving a selected one or both of said first and second optical signals on a photodetector (30a, 30b),
providing, by means of a local oscillator arrangement (34, 38) optically connected with said photodetector (30a, 30b),
a selected one of a first local oscillator signal having a wavelength corresponding to said first wavelength and a second local oscillator signal having a wavelength corresponding to said second wavelength, in case both of said first and second optical signals are received on said photodetector, or
both of said first and second local oscillator signals in case a selected one of said first and second optical signals is received on said photodetector; and
processing the output signal of said photodetector by means of an electronic receiver circuit (32) connected to said photodetector (30a, 30b).

## Description

### FIELD OF THE INVENTION

The present invention is in the field of data transmission in optical networks. More particularly, the present invention relates to a method of transmitting data in an optical network from a first location to a second location which allows an efficient way of switching frequency bands for optical channels, as well as a corresponding receiver and a corresponding transceiver.

### BACKGROUND OF THE INVENTION

In optical networks, data signals are transported from a first location to a second location within a certain frequency band, which is also referred to as a "channel". While every data signal occupies a certain frequency band, in the following reference is usually made *pars pro toto* to "the frequency" or "the wavelength" of the optical signal or the corresponding channel for simplicity, it being understood that the data signal and the corresponding channel is in reality always associated with a certain wavelength range rather than a single wavelength. In some instances, it is necessary to change the wavelength of the channel during operation. One reason to do this is for example in order to defragment the spectral occupation of the path taken by the data signal from said first to said second location, to allow for a more efficient allocation of resources on this path.

In other instances, the data signal must be rerouted from an original path to a different path from said first location to said second location. This could be motivated by a reorganization of traffic, for example in order to allocate sufficient resources for new services to be provided, or to reuse freed resources from services that are terminated. A rerouting may also be necessary in case the original path between said first and second locations decays in signal transmission quality, or even fails altogether. For this purpose, the network management system establishes a new path either in advance (protection) or upon failure (restauration) of the transmission along the original path. Generally, on the protection or restoration path, the data signal will be transmitted with the same wavelength as on the original path. In some instances, a dedicated alternative path is reserved in advance to be ready in order to accommodate the traffic when the original path fails, which is called protection and "protection path" in the art. There are two flavors of protection keeping a dedicated alternative path on reserve. In 1:1 protection, the data signal is transmitted solely on the working path as long as this path is intact. Thus, the optical signal is not transmitted over the alternative path and the alternative path might be used for transmitting lower priority traffic, which is squelched in case the working path fails and the optical signal is switched to the alternative path. If one alternative path is kept on reserve for n working paths, the protection scheme is called "1:n protection". Keeping m alternative paths on reserve for n working paths is called "m:n protection". In order to keep the downtime of the traffic small, the optical signal can alternatively be transmitted permanently on both paths. In case the working path fails, the receiver is connected to the alternative path. This scheme is typically referred to as "1+1 protection". Usually, the data signal is transmitted on both paths via the same wavelength, since otherwise two different transceivers are required. Irrespective of the reason for changing the wavelength for the data signal, performing this change quickly is advantageous, such as to minimize or avoid a loss or delay of data, and with minimum hardware expense.

Within this document, the term "local oscillator" is used in the sense of modulation and detection theory. Using a nonlinear process, an incoming optical signal is mixed in the receiver with a reference oscillator, called "local oscillator", in order to generate a signal at the difference frequency carrying the information of the original higher frequency signal. Thus, a signal carrying the information but oscillating at a lower and more easily processed frequency is generated.

### SUMMARY OF THE INVENTION

The object underlying the invention is to provide a method and corresponding apparatus for transmitting data in an optical network from a first location to a second location which allows for quickly changing the wavelength on which the received data signal is transmitted, with low hardware expense.

This problem is solved according to a first aspect of the invention by a method according to claim 1, according to a second aspect of the invention by a method of claim 11, a receiver unit according to claim 12, and a transceiver according to claim 14. Preferable embodiments of the invention are defined in the dependent claims.

The method of transmitting data in an optical network from a first location to a second location according to the first aspect of the present invention comprises the following steps:
modulating a same data signal on first and second carriers having first and second wavelengths, respectively, to generate first and second optical signals carrying the same information, transmitting said first and second optical signals from said first location to said second location through said optical network, coherent receiving of a selected one of said first and second optical signals by means of a coherent receiver located at said second location.
Herein, the coherent receiving comprises the following steps:
   - receiving a selected one or both of said first and second optical signals on a photodetector,
   - providing, by means of a local oscillator arrangement optically connected with said photo detector,
      (i) a selected one or both of a first local oscillator signal having a wavelength corresponding to said first wavelength and a second local oscillator signal having a wavelength corresponding to said second wavelength, in case both of said first and second optical signals are received on said photodetector, or
      (ii) both of said first and second local oscillator signals in case a selected one of said first and second optical signals is received on said photodetector, and
   - processing the output signal of said photodetector by means of an electronic receiver circuit connected to said photodetector.

Accordingly, in the method according to the first aspect of the invention, the same data signal exists simultaneously in two different spectral bands or channels. Note that in communications, data that is to be transmitted from a transmitter to a receiver is typically accompanied by some control information. In the art, one therefore often refers to the data proper as the "payload information", as compared to the additional control information. In the present invention, for first and second optical signals to be regarded as "carrying the same information", it is sufficient that they carry the same payload information, while they may differ with regard to their control information within the scope of the present invention. Moreover, note that control information may sometimes be transmitted in some additional bytes reserved for this purpose, but may alternatively also be transmitted by means of an additional modulation, for example by means of a variable optical attenuation, by which the detection of the "payload information is not significantly disturbed". Accordingly, the fact that "a same data signal is modulated on the first and second carriers" does not rule out that the first and second optical signals may include some additional modulation that is unique to the first and second optical signals, such as to transmit corresponding control information, in addition to the payload information. That is to say, the "same data signal" may and typically will only represent the "payload information", not ruling out that there may be additional control information modulated on the first and second carriers which may differ between the first and second optical signals. This coexistence of the same data signal in two different spectral bands may in some applications be only for a transient period of time, to effect the wavelength change, or for an extended period of time, such as in 1+1 protection scenarios described in more detail below. In any case, a wavelength change can be effected easily and reliably without any significant loss or delay of data, because copies of the data signal with the current wavelength (e.g. the first wavelength) and with the new wavelength (e.g. the second wavelength) coexist at the second location. Moreover, this can be achieved with very moderate hardware effort. Namely, according to the invention, since the first and second wavelengths are different from each other, the respective carriers can be modulated by the same modulator and still give two distinguishable first and second data signals.

Moreover, coherent receiving of a selected one of first and second optical signals by means of a coherent receiver located at the second location can likewise be carried out with moderate hardware expense, and in particular, using a single photodetector for receiving a selected one or both of the first and second optical signals, and using a single electronic receiver circuit connected to said photodetector. Note that the selection of one of the first and second data signals for coherent receiving effectively amounts to the switchover in the wavelength, and this can indeed be carried out rapidly and with moderate hardware expense.

The selection of the data signal can for example be effected by selecting only one of the first and second data signals to reach the photodetector. Then, no further selection among the first and second local oscillator signals is necessary, because one and only one of the first and second local oscillator signals will match the wavelength of the selected data signal, and the corresponding data can be recovered by the electronic receiver circuit. While the superposition of the nonmatching local oscillator with the selected data signal on the photodetector will also theoretically provide a heterodyne signal, its frequency (the so-called "intermediate frequency") will be so high that it is easily filtered out or simply remains unnoticed by the electronic receiver circuit and hence is automatically discarded.

Alternatively, the selection can be effected by selecting only one of the first and second local oscillator signals, while both, the first and second optical data signals may simultaneously impinge on the photodetector. In this case too, the selected first or second local oscillator will only match the corresponding one of the first and second optical data signals, and the corresponding data can be recovered by the electronic receiver circuit.

In one embodiment, said first and second optical signals are transmitted from said first location to said second location along different optical paths. In this embodiment, the method can be for example used in scenarios where the optical data signal is to be rerouted from an original path to a new path, where it will generally be assigned a different wavelength. For the transient switchover-period, the same data is then sent on two different wavelengths to the second location, where both copies of the data signal are simultaneously available, thereby minimizing switchover losses or delays.

In other embodiments, however, the first optical signal is used for routine data transmission and the second optical signal is used as a protection channel. In this embodiment, the first optical signal is under normal working conditions transmitted along the first path and selected for coherent receiving at the second location. The second optical signal, carrying the same information, is simultaneously transmitted to the second location along the different, second path, which in this embodiment forms a protection path, but it is not selected for coherent receiving at the second location. Only when a failure in the first path occurs, data transmission is switched over to the second path by selecting the second optical signal for coherent receiving, with practically no loss or delay, since the second optical signal has been available at the second location all the time and only needs to be selected for coherent receiving using the same photodetector, local oscillator arrangement and electronic receiver circuit as before. Accordingly, although there is a complete redundancy in this embodiment, there is no need to double the coherent receiver hardware at the second location.

In alternative embodiments, the first and second optical signals are transmitted from said first location to said second location along the same optical path. This embodiment relates to situations where there is no intention to change the optical path, but only to rearrange the channels on the path, such as to defragment the wavelength occupancy, for example in order to establish new services. This is for example of particular importance if super channels shall be established, i.e. a number of carriers closely packed in a predetermined spectral range that is treated by the network as a single channel and allows to increase the spectral efficiency due to the closer package of the carriers within the super channel as compared to ordinary dense wavelength division multiplexing channels. This is for example also of particular importance if an existing super channels, i.e. a number of carriers that is treated by the network as a single channel, with carriers being widely spread over the optical spectrum gets increased spectral efficiency by packaging the carriers within a continuous spectral range.

In preferred embodiments, the first and second optical signals are simultaneously transmitted during the course of a switch-over time for changing the wavelength for a certain channel while remaining on the optical path, or while changing the wavelength along with changing the optical path.

According to a preferred embodiment, one of said first and second optical signals is selected to be received by said photodetector by means of an optical switch.

In a preferred embodiment, said first and second local oscillator signals are simultaneously provided, thereby allowing for coherent receiving of said data signal irrespective of whether the first or second optical signal is selected to be received at the photodetector. For example, assuming that the first optical signal is selected, then the superposition of the first local oscillator signal and the first optical signal will lead to an intermediate frequency signal in a frequency range that can be processed by the electronic receiver circuit. Herein, the fact that the first local oscillator wavelength "corresponds to the first wavelength", i.e. the wavelength of the carrier of the first optical signal means that its wavelength is identical with, or at least close to the first wavelength. Preferably, the magnitude of the difference between the first local oscillator frequency and the frequency of the first optical signal is equal to or smaller than the intermediate frequency supported by the coherent receiver. The presence of the second local oscillator signal does not disturb the coherent receiving of the first optical signal, because the difference in frequency of the second local oscillator signal and the first optical signal will always be so large that the corresponding intermediate frequency can be easily filtered out or remains unnoticed by the electronic receiver circuit even without providing for dedicated filters.

The same situation applies in an alternative embodiment, in which said first and second optical signals are simultaneously received by said photodetector, and a selected one of said local oscillator signals is provided for coherent receiving of the corresponding optical signal. Only if both, the first and second data signal and the first and second local oscillator signals would be simultaneously superimposed on the photodetector and both data signal and local oscillator signal pairs would have identical wavelength difference, two intermediate frequency signals of essentially the same frequency would be generated that could not be simultaneously processed by the electronic receiver circuit. Accordingly, in the method of the invention care is taken that at most three of the four optical signals are simultaneously superimposed on the photodetector.

In a preferred embodiment, the method of the invention further comprises the steps of
- generating, at said second location, third and fourth carriers having said first and second wavelength, respectively,
- modulating a same data signal on said third and fourth carriers, to generate third and fourth optical signals carrying the same information, and
- transmitting said third and fourth optical signals from said second location to said first location through said optical network.

According to this embodiment, a bidirectional transmission is provided, where for both directions, the same wavelengths are chosen. Choosing the same wavelengths for both directions inter alia facilitates the planning and the management of the network. In this embodiment, also the simultaneous transmission of the same data signal on two different wavelengths is enabled bidirectionally.

In a preferred embodiment, said first and second local oscillator signals are branched off from said third and fourth carriers, respectively. This means that no further light sources need to be provided for the local oscillator arrangement in addition to the light sources for generating the third and fourth carriers which are necessary anyhow. Again, it is seen that in the framework of preferred embodiments of the invention, the simultaneous transmission of the same data signal on two different wavelengths can be effected with minimum additional hardware expense.

In a preferred embodiment, said optical network has a horseshoe topology comprising first and second end nodes A, B, located at said first location, and at least one intermediate node located at said second location. Herein, the intermediate node is connected via a first network segment with said first end node A and via a second network segment 132 with said second end node B. Each of said first and second network segments comprises a pair of optical fibers for bidirectional signal transmission. In this embodiment, said first optical signal is transmitted from said first end node A at said first location to said intermediate node at said second location via said first network segment, and said second optical signal is transmitted from said second end node B at said first location to said intermediate node at said second location via said second network segment.

Such an optical network with a horseshoe topology is particularly useful in access or metro networks. The horseshoe topology is strictly speaking a linear topology, as is extends between the first and second end nodes A, B, but since the end nodes one located closely together at the aforementioned first location, it looks like a ring. At the first location, the first and second and nodes A, B, can be connected to a further network, such as a transport network.

As before, the first and second optical signals carry the same information, but on different carrier wavelengths. Consequently, by tuning the local oscillator to a selected one of these two carrier wavelengths, one of the first and second optical signals can be selectively received at said intermediate node.

In this embodiment too, it is possible to provide data transmission in the opposite direction, i.e. from the intermediate node at the second location to the first location, using third and/or fourth optical signals employing the first and second carrier wavelengths, respectively, except that in this embodiment, there are two separate and nodes A, B at said first location.

In one embodiment, said third optical signal is split into first and second components, wherein said first component of said third optical signal is transmitted from said intermediate node at said second location via said first network segment to said first end node A at said first location. Likewise, said second component of said third optical signal is transmitted from said intermediate node at said second location via said second network segment to said second end node B at said first location.

Preferably, said fourth optical signal is likewise split into first and second components, wherein said first component of said fourth optical signal is transmitted from said intermediate node at said second location via said first network segment to said first end node A at said first location, and
said second component of said fourth optical signal is transmitted from said intermediate node at said second location via said second network segment to said second end node B at said first location. In this embodiment, the intermediate node sends both, the third and fourth optical signals to both end nodes A. B, via different fibers. By tuning the local oscillator at the receiver at the corresponding first or second end node A, B, the desired signal can be selected.

While so far only a single intermediate node has been described, the horseshoe network will typically have a plurality of intermediate nodes, which may each operate in the same way as described above. For example, in one embodiment, said optical network comprises one or more further intermediate nodes located within one of the first and second network segments, and said method further comprises transmitting a corresponding a fifth optical signal from said first end node A to said at least one further intermediate node and transmitting a corresponding sixth optical signal from said second end node B to said at least one further intermediate node, wherein said corresponding fifth and sixth optical signals carry the same information but have corresponding third and fourth carrier wavelengths different from each other and from said first and second wavelengths. Herein, the term *"corresponding* fifth/sixth optical signal" and "*corresponding* third/fourth wavelength" indicates that there may be more than one "further intermediate nodes", and that each of this more than one further intermediate node has its own corresponding pair of fifth/sixth optical signals at corresponding third/fourth wavelengths associated therewith, which will be different for different further intermediate nodes.

In a related embodiment, said optical network comprises one or more further intermediate nodes located within one of the first and second network segments, and said method further comprises: splitting a corresponding seventh optical signal into first and second components and transmitting said first component of said corresponding seventh optical signal from said further intermediate node to said first end node A and transmitting said second component of said corresponding seventh optical signal from said further intermediate node to said second end node B,
splitting a corresponding eighth optical signal into first and second components and transmitting said first component of said corresponding eighth optical signal from said further intermediate node to said first end node A and transmitting said second component of said corresponding eighth optical signal from said further intermediate node to said second end node B, wherein said corresponding seventh and eighth optical signals carry the same information, and wherein said corresponding seventh and eighth optical signals have the corresponding third and fourth carrier wavelengths, respectively.

In a preferred embodiment, said optical network comprises at least two further intermediate nodes located within one of said first and second network segments, wherein each of the corresponding third and fourth carrier wavelengths associated with each of said at least two further intermediate nodes are different from each other.

While for systematic reasons a distinction has been made in the above description between the first mentioned "intermediate node" and the optional "one or more further intermediate nodes", the skilled person will appreciate that in various embodiments, there will be a plurality of equivalent intermediate nodes, operating in the same way as the single or exemplary intermediate node described above, except that each of the intermediate nodes operates on a unique pair of carrier wavelengths,

In a preferred embodiment, the method further comprises a step of dropping said first and second optical signals at an optical add-drop multiplexer (OADM) at said second location. Preferably, the method further comprises a step of adding said third and fourth optical signals at said OADM. Favorable OADM structures for this purpose will be described in specific embodiments below. In particular, said OADM may be a reconfigurable optical add-drop multiplexer (ROADM).

As was explained above, according to the first aspect of the invention, the same data signal exists simultaneously in two different spectral bands or channels, even if this coexistence of the same data signal in two different spectral bands should only be for a transient period of time, such as to effect the wavelength change. The rationale behind this was that a wavelength change can be effected easily and reliably without any signficant loss or delay of data, because copies of the data signal with the current wavelength (e.g. the first wavelength) and with the new wavelength (e.g. the second wavelength) coexist at the second location. However, when the method is only concerned with switching wavelengths, it is not always necessary that two optical signals carrying the same data are actually transmitted. Instead, for these types of applications, a method according to a second aspect of the invention is provided, comprising the following steps:
generating an optical signal by either
   (i) modulating a data signal on a selected one of first and second carriers having first and second wavelengths, respectively, or
   (ii) modulating a same data signal on first and second carriers having first and second wavelengths, respectively, to generate first and second optical signals carrying the same information, and selecting one of said first and second optical signals as said optical signal,
transmitting said optical signal from said first location to said second location through said optical network,
coherent receiving of said optical signal by means of a coherent receiver located at said second location, wherein said coherent receiving comprises the following steps:
   - receiving said optical signal on a photodetector,
   - providing, by means of a local oscillator arrangement optically connected with said photodetector, both of a first local oscillator signal having a wavelength corresponding to said first wavelength and a second local oscillator signal having a wavelength corresponding to said second wavelength, and
   - processing the output signal of said photodetector by means of an electronic receiver circuit (32) connected to said photodetector.

In other words, instead of selecting one of the first and second optical signals to be received on the photodetector at the receiver side, as recited in some of the previously mentioned embodiments, this selection can already be carried out at the transmitter side. This can according to option (i) be done by modulating a data signal on a selected one of first and second carriers having first and second wavelengths, respectively. In the alternative, according to option (ii), the selection can be made by modulating a same data signal on first and second carriers having first and second wavelengths, respectively, to generate first and second optical signals carrying the same information, and selecting one of said first and second optical signals as said optical signal for transmission. In both cases, only one optical signal, with the selected first or second wavelength, will be transmitted to the receiver. However, in this scenario too, the switching can be carried out very rapidly and seamlessly, because at the local oscillator arrangement, both of a first local oscillator signal having a wavelength corresponding to said first wavelength and a second local oscillator signal having a wavelength corresponding to said second wavelengths are simultaneously present, such that a sudden change in the frequency of the incoming optical signal does not lead to a delay in receiving.

The present invention further relates to a receiver unit for coherent receiving a selected one of a first and a second optical signal having first and second wavelengths, respectively, said first and second optical signals carrying a same data signal, said receiver unit comprising
- a photodetector arranged to receive a selected one or both of said first and second optical signals,
- a local oscillator arrangement optically connected with said photo detector and configured to provide a selected one or both of a first local oscillator signal for coherent receiving of said first optical signal and a second local oscillator signal for coherent receiving of said second optical signal, and
- an electronic receiver circuit connected to said photodetector.

Herein, the receiver unit may comprise an optical switch for selecting one of said first and second optical signals to be received by said photodetector.

In a preferred embodiment, said local oscillator arrangement is configured for simultaneously providing said first and second local oscillator signals, thereby allowing for coherent receiving said data signal irrespective of whether the first or second optical signal is selected to be received at the photodetector. Herein, the "local oscillator arrangement" can be any arrangement that allows for providing said first and second local oscillator signals. As explained above, this does not require that the local oscillator arrangement has dedicated light sources of its own, but could also be formed by a suitable arrangement for branching off the first and second local oscillator signals from other light sources mainly provided for transmitting purposes.

In a preferred embodiment, the receiver unit is configured for simultaneously receiving said first and second optical signals by said photodetector, wherein said local oscillator arrangement is configured for providing a selected one of said local oscillator signals for coherent receiving of the corresponding optical signal.

In a preferred embodiment, said receiver unit is coupled with an optical add-drop multiplexer (OADM), said OADM being configured for dropping said first and second optical signals. Herein, the OADM may preferably be a ROADM.

The present invention further relates to a transceiver comprising
- a receiver unit according to one of the embodiments described above,
- light sources for generating, third and fourth carriers having said first and second wavelength, respectively, and
- a modulator for modulating a same data signal on said third and fourth carriers, to generate third and fourth optical signals carrying the same information.

With this transceiver, the transmittal of a same data signal on two different wavelengths, and the fast and efficient wavelength switching enabled thereby, can be effected bidirectionally and based on the same pair of carrier wavelengths.

Using the same first and second wavelengths for both, transmitting and receiving allows for a very simple structure of the local oscillator arrangement. In fact, in a preferred embodiment, the local oscillator arrangement is formed by a coupler for branching off a portion of said third and fourth carriers and providing it to the photodetector. This way, the local oscillator arrangement does not need to include dedicated light sources of its own.

In a preferred embodiment, the transceiver is coupled with a reconfigurable optical add-drop multiplexer (ROADM), said ROADM being configured for dropping said first and second optical signals to be received by the receiving unit of said transceiver, wherein said transceiver and said ROADM are configured for adding said third and fourth optical signals at said ROADM.

### BRIEF DESCRIPTION OF THE FIGURES

- Fig. 1: shows a schematic representation of an optical network with transceivers according to an embodiment of the invention at first and second locations.
- Fig. 2: is an enlarged representation of the transceiver shown in Fig. 1.
- Fig. 3: shows an alternative embodiment of a transceiver according to the invention.
- Fig. 4: shows a second alternative embodiment of a transceiver according to the invention.
- Fig. 5: shows a third alternative embodiment of a transceiver according to the invention.
- Fig. 5a: shows a modification of the transceiver of Fig. 5.
- Fig. 6: shows a fourth alternative embodiment of a transceiver according to the invention.
- Fig. 6a: shows a modification of the transceiver of Fig. 6.
- Fig. 7: shows different modes of operation and two yet further alternative embodiments of a transceiver according to the invention.
- Fig. 8: shows a further alternative embodiment of the transceiver with reduced complexity and a corresponding algorithm for changing the wavelength
- Fig. 9: shows the application of the transceiver in an access or metro network with horse shoe topology and OADM connecting the transceiver to a network via two nodes.
- Fig. 10: shows a schematic representation of a ROADM connected with a transceiver.
- Fig. 11: shows a schematic representation of an alternative ROADM connected with a transceiver.

### DESCRIPTION OF THE PREFERRED EMBODIMENTS

For the purposes of promoting an understanding of the principles of the invention, reference will now be made to preferred embodiments illustrated in the drawings, and specific language will be used to describe the same. It will nevertheless be understood that no limitation of the scope of the invention is thereby intended, such alterations and further modifications in the illustrated method, receiver, and transceiver and such further applications of the principles of the invention as illustrated therein being contemplated as would normally occur now or in the future to one skilled in the art to which the invention relates.

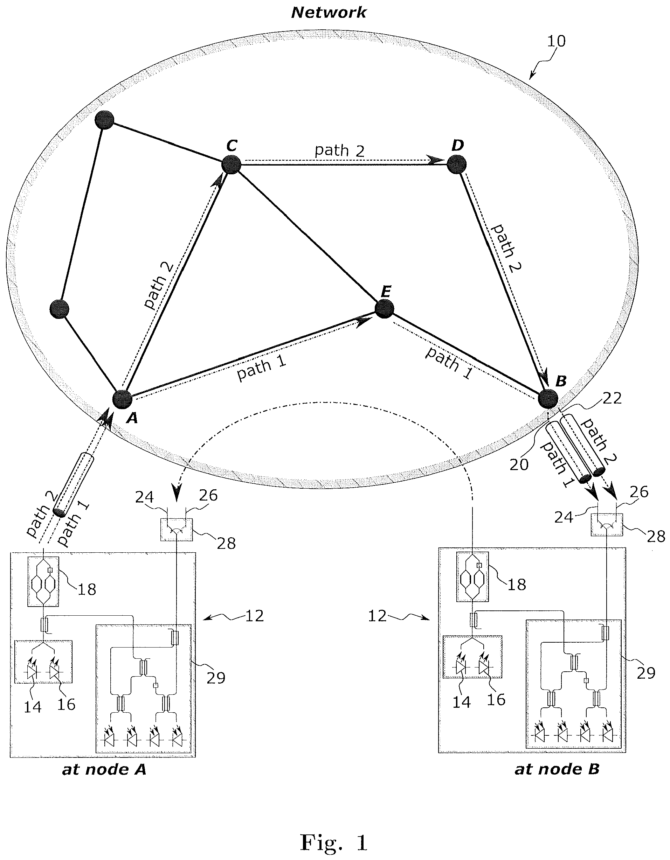

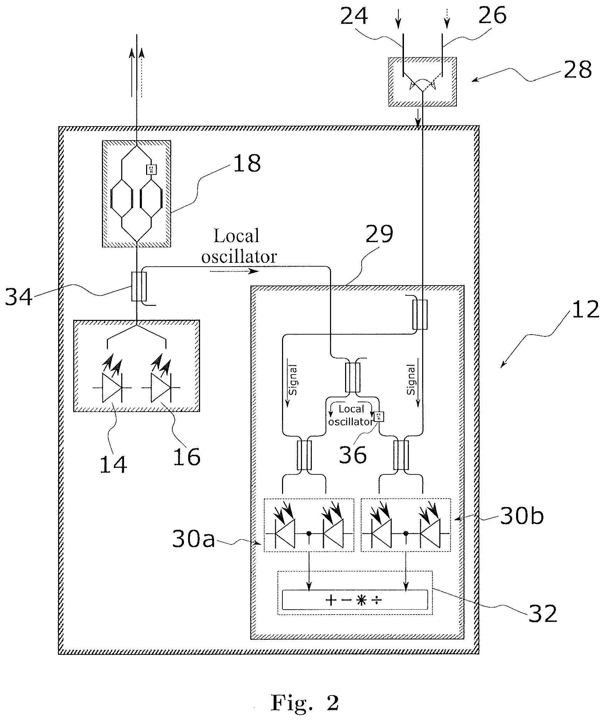

In Fig. 1, an optical network 10 comprising a plurality of nodes is shown, wherein adjacent nodes are connected by optical links. Within said optical network 10, the node A forms a first location at which a transceiver 12 is provided. The node B resembles a second location, at which a further transceiver 12 is provided. The transceiver 12 is shown in an enlarged version in Fig. 2. In the situation shown, a data signal (first data signal in the following) is currently transmitted on a first wavelength from the first location to the second location along a first path extending from node A to node B via intermediate node E.

It is now assumed that the data signal shall be redirected for transmission along a second path extending from node A to node B via intermediate nodes C and D. Since the first wavelength will generally be occupied on the second path, or at least not be the optimum wavelength for an efficient use of resources, not only the path, but also the wavelength of the optical signal needs to be changed. In order to change the wavelength of the optical signal, while avoiding or at least minimizing any loss or delay of data transmission, a first and a second carrier having first and second wavelengths are generated by first and second light sources 14, 16, respectively in the transceiver 12 at the first location (node A). The first and second carriers are jointly fed into a same modulator 18, which in the present embodiment is an IQ modulator, where both carriers a modulated with a same data signal, thereby generating a first and a second optical signal carrying the same information. The first optical signal is transmitted along the first path (A to E to B) to the second location, while the second optical signal is transmitted along the second path (A to C to D to B) to the second location.

At the transceiver 12 at the second location (node B), initially, i.e. prior to switching the paths and the wavelengths, the first optical signal is coherently received by a coherent IQ receiver 29. At node B, two separate optical ports 20, 22 are provided, where the first and the second optical signals, respectively are dropped. The drop ports 20, 22 are connected to a corresponding one of first and second inputs 24, 26 of an optical switch 28 at the transceiver 12 at the second location (see Fig. 2), and the switch 28 is initially in a first configuration, where the first optical signal at input port 24 is directed to first and second pairs of balanced photodiodes 30a, 30b, which in combination form an example of the "photodetector" referred to in the summary of the invention. On the first and second pairs of balanced photodiodes 30a, 30b, the first optical signal is combined with first and second local oscillator signals at said first and second wavelengths, provided by first and second light sources 14, 16, respectively. The light sources 14, 16 at the transceiver 12 at the second location primarily serve to provide third and fourth carriers to be modulated by the corresponding IQ modulator 18 to generate optical signals for transmission in opposite direction, i.e. from the second location at node B to the first location at node A. The third and fourth carriers have the first and second wavelengths, respectively, i.e. the same wavelengths as the first and second carriers. Accordingly, branched-off portions of the third and fourth carriers can be used as the first and second local oscillator signals, as is shown in Fig. 1 and 2, where the first and second local oscillator signals are branched-off using a coupler 34.

Since in the embodiment of Fig. 1 and 2 IQ modulation is used, a 90° phase shifter 36 is introduced in the light path of the first and second local oscillator signals to the second pair of balanced photodiodes 30b.

Since the optical paths between the transceiver 12 at node A and the transceiver at node B are not polarization maintaining, both polarizations must be detected even if transmission is done only on one polarization as shown. The detection of the second polarization requires at each transceiver 12 two further pairs of balanced receivers 30a and 30b (not shown) and a feeding optical coupler network including polarization beam splitter for the data signal and the local oscillator signals. Transmission is shown only for one polarization even though it is state of the art to use both polarizations also to double the transmission capacity of the channel.

The photodiodes 30a, 30b measure the intensity of the combination of the first optical signal and first and second local oscillator signals impinging thereon. Therefore, mixed or heterodyne terms in the electrical signal output signal of the photodiodes 30a, 30b are generated at the intermediate frequency, which corresponds to the difference in the frequency of the optical signals. Unless the local oscillator matches the frequency of the optical signal, as is here the case for the first optical signal and the first local oscillator signal, the intermediate frequency will be too high to be even recognized by an electronic receiver circuit 32 connected to the photodiodes 30a, 30b. This is the case for the heterodyne term of the "nonmatching" second local oscillator and first optical signal, which is either filtered out or simply remained unnoticed by the electronic receiver circuit. Accordingly, while the second local oscillator signal is not needed for receiving the first optical signal, it also does not disturb the coherent receiving thereof, such both local oscillator signals can be directed to the photodetector 30a, 30b at all times.

By the time the data signal is to be switched from transmitting along the first path with the first frequency to the second path and second frequency, all that needs to be done is switching the switch 28 such as to direct the second optical signal, which at this point in time is already present, to the first and second pair of balanced photodiodes 30a, 30b, with practically no delay and losses. After this switchover, the transmission along the first optical path can be shut down.

The described setup combines three key advantages. First, no time-critical synchronization of actions at nodes A and B is required. Once node A has activated transmission on the second wavelength, the transceiver at node B can perform the transition to the second wavelength at any time independent of the transceiver at node A. Second, the presented transceiver setup allows generatingseveral data signals at different wavelengths carrying identical information using a single modulator 18 and the corresponding control equipment. Since light sources emitting several wavelengths can be integrated on a single chip, the increase in complexity is negligible. Third, the switch-over of the communication from the first wavelength to the second wavelength is performed within a minimum period of time since it does not depend on a communication between transceivers at node A and node B. Thus, round-trip times are not of concern.

While in the previous description the situation of changing the frequency along with the change of path has been illustrated, the invention is not limited to this scenario. A further useful scenario is the case, where the frequency is changed without changing the optical path, for example for the purpose of defragmenting the distribution of frequencies on the first path. In this scenario, the situation is the same as described before, except that prior to changing the frequency, both, the first and second optical signals are transmitted along said first path.

Moreover, the method and apparatus of the invention are also useful in 1+1 protection scenarios. In this case, the first and second optical signals carrying the same data signal and hence the same information are simultaneously transmitted over the first and second paths for an extended period of time. At the second location, the first optical signal is selected for coherent receiving, as described before, which means that the first path is the working path for ordinary data transmission. However, at all times, the second optical signal is transmitted along the second path, and in case of a failure of the working path (first path), the second optical signal is already present as a back-up signal and can immediately be switched on by operating the switch 28. This is a very powerful way of protecting a channel with still limited hardware expense, since the modulator 18 and the IQ receiver 29 do not have to be doubled.

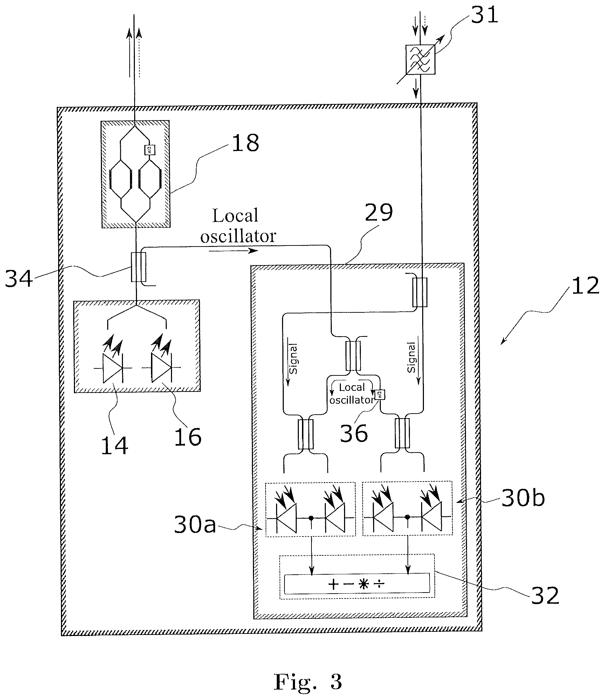

Fig. 3 shows a setup based on the setup of Fig. 2 wherein the optical switch in front of the receiver has been replaced by a tunable optical bandpass filter 31. Thus, the setup has a single input to which the first optical and the second optical signal are provided. The optical tunable bandpass filter 31 is configured to pass the optical signal to be processed by the coherent receiver and to attenuate or even suppress the other optical signal. For this, the setup takes advantage of the fact that the two signals have different wavelengths and can be separated from each other by optical components having wavelength dependent transmission characteristics.

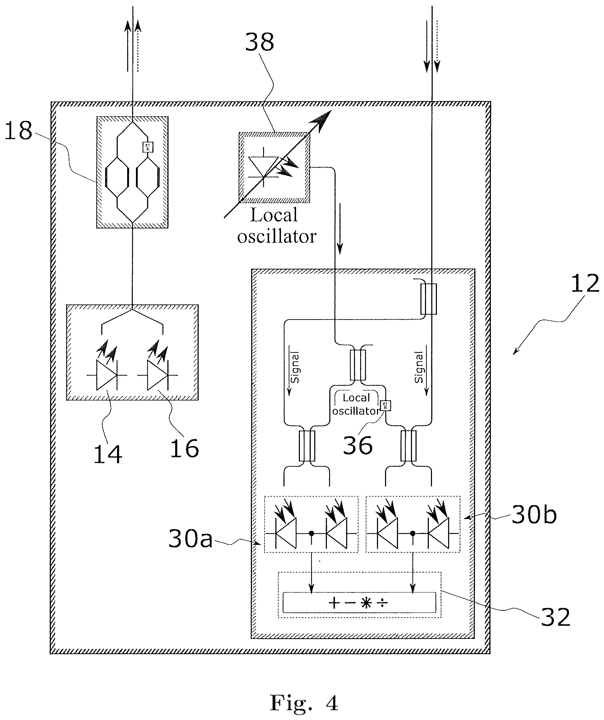

Fig. 4 shows a further modified embodiment of the transceiver 12. In the embodiment of Fig. 4, the switch 28 shown in Fig. 1 and 2 is omitted. Accordingly, the first and second optical signals will simultaneously impinge on the first and second pairs of balanced photodiodes 30a, 30b. The selection of the optical signal for coherent receiving is effected by means of a separate wavelength adjustable local oscillator 38 likewise connected to said first and second balanced photodiode pairs 30a and 30b. If the local oscillator 38 is adjusted to emit the first local oscillator signal at a wavelength corresponding to or close to the first wavelength, the first optical signal will be coherently received, while the second optical signal will be ignored. Conversely, if the local oscillator 38 is adjusted to emit the second local oscillator signal at a wavelength corresponding to or close to the second wavelength, the second optical signal will be coherently received, while the first optical signal would be ignored. Accordingly, by tuning the wavelength of the local oscillator 38, the optical signal can be selected for coherent receiving.

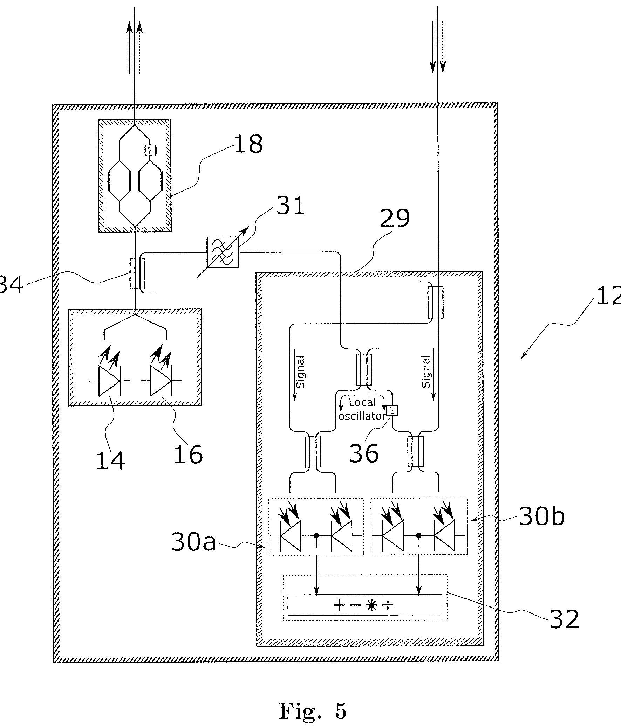

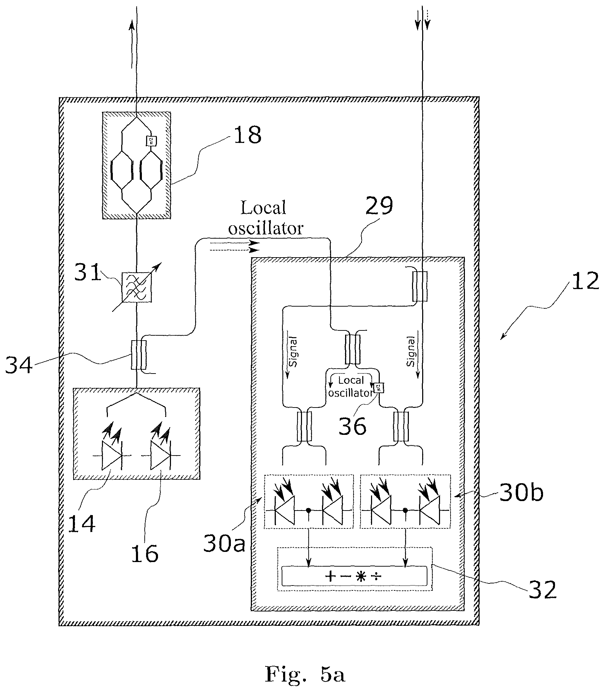

A fourth variant is shown in Fig. 5 in which the first and the second local oscillator signals are branched off from the carriers. However, only one of the local oscillator signals is provided to the receiver. For this purpose, a tunable optical bandpass filter 31 is inserted between the coupler 34 branching off part of the carriers and the receiving unit 29. The optical bandpass filter 31 lets pass one of the carriers almost without attenuation, whereas the other one is significantly attenuated or even suppressed.

Fig. 5a shows a variation of the transceiver 12 of Fig. 5, in which the optical bandpass filter 31 is provided between the coupler 34 and the modulator 18. According to this variant, by means of the bandpass filter 31, one of the first and second wavelengths is selected for modulation, such that only a single optical signal of selected (first or second) wavelength is generated for transmission to a similar transceiver located at node B. However, both of a first local oscillator signal having a wavelength corresponding to the first wavelength and a second local oscillator signal having a wavelength corresponding to said second wavelengths are provided to the photodetectors 30a, 30b, such that an incoming signal of either first or second wavelength can be received. Functionally, this embodiment is similar to the embodiment of Fig. 2 and 3, except that the selection of the wavelength of the incoming signal is carried out already at the transmitting location (node A), rather than at the receiving location (node B). This embodiment allows for a rapid, basically seamless switching between wavelengths and can be applied in scenarios, where e.g. the simultaneous transmittal of the same data signal on different wavelengths on different paths, such as for protection purposes, is not envisaged.

Note that although the bandpass filter 31 is shown to be arranged before the modulator 18, it can also be arranged after the modulator, or after the modulator and an additional amplifier.

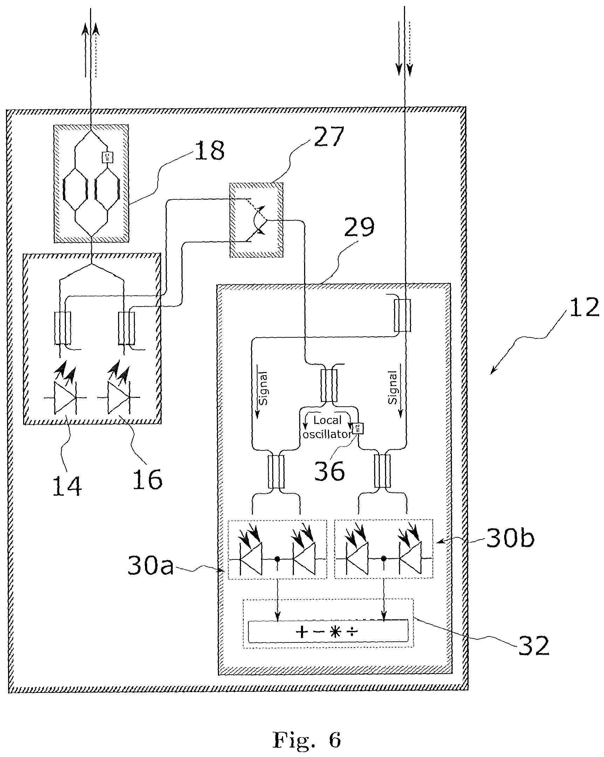

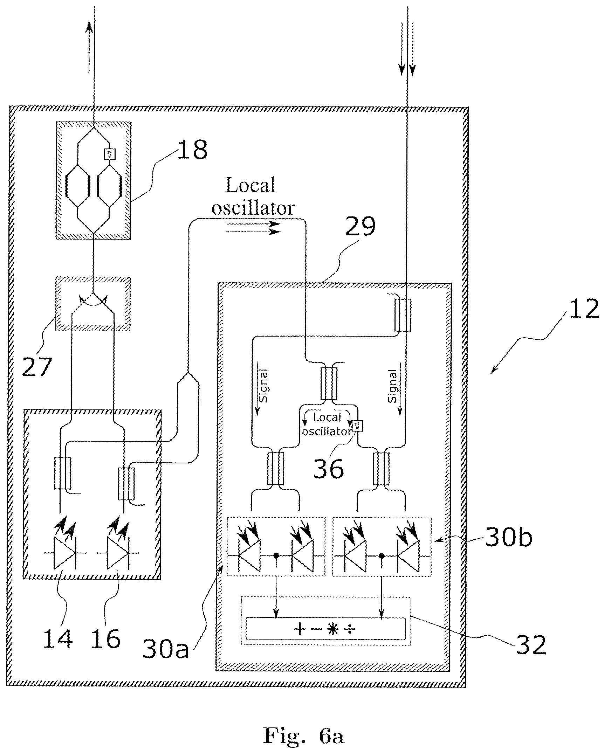

Finally, Fig. 6 shows a fifth variant in which parts of the carriers are branched off individually before the carriers are combined and supplied to the modulator. These parts of the carriers are then directed to the inputs of an optical switch 27 allowing to forward one of them selectively to the receiver 29 and serving there as local oscillator.

Fig. 6a shows a variant that is structurally very similar to that of Fig. 6, but functionally similar to that of Fig. 5a: in the transceiver 12 of Fig. 6a, the optical switch 27 is arranged between the first and second light sources 14, 16 and the modulator 18, such that one of the first and second wavelengths can be selected for generating a single optical signal to be transmitted.

While in the previous examples, reference has always been made to two (first and second) optical signals, the skilled person will appreciate that the same principle can and in practice will be extended to a plurality of first frequencies, and a corresponding number of second frequencies, with a corresponding multiplication of the components shown in the transceiver 12, or multiplication of the transceivers 12.

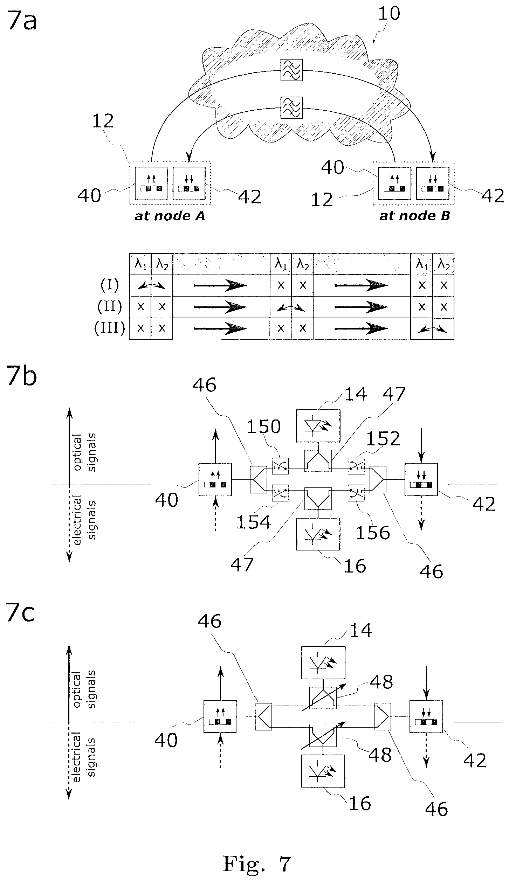

Fig. 7 shows different modes of operation of the transceivers 12 located in an optical network 10 at node A and node B, respectively, and two further alternative embodiments of a transceiver according to the invention. Each transceiver consists of a transmitting unit 40 and a receiving unit 42. As illustrated in Fig. 7a, the invention supports three different fundamental modes of operation for communication from node A to node B, and vice versa. The two communication directions are illustrated by elliptical arcs. The table indicates the wavelengths emitted by transmitting unit 40 at node A, the transmission characteristics of the network for both wavelengths irrespective of whether one or two paths are used, and the wavelengths that can be received by the receiving unit 42 at node B in the current configuration. In the first mode of operation (I), the network 10 is configured to transmit a selected one of the first and the second signal wavelength to node B, and the receiver at node B is further arranged to receive both wavelengths, i.e. local oscillators at both wavelengths are launched onto the respective photodiodes. Thus, the wavelength actually used to transmit data from node A to node B is determined solely by the wavelengths activated by transceiver 12 at node A (indicated by the small arc with two arrows in the table). Alternatively, the transmitting unit 40 at node A may emit data at both wavelengths and the receiving unit 2 at node B may be prepared to receive both wavelengths in a second mode of operation (II). Thus, the network 10, and in particular the ROADM at node B determines which wavelength is finally fed to the transceiver at node B. The last row of the table shows a third mode operation (III) wherein the transmitting unit 40 at node A provides the data signal at both wavelength and the network 10 is configured to route both wavelengths to the receiving unit 42 at node B. Thus, the transceiver 12 needs to select one out of the two wavelengths by feeding the appropriate local oscillator to the photodiodes of the receiving unit 42. This mode of operation is supported by any of the transceiver setups shown in Figs. 2 to 6.

A setup supporting all considered modes of operation is represented in Fig. 7b. Two light sources 14 and 16 emitting continuous wave (CW) lightwaves at different wavelengths constitute the core part of this transceiver setup. The output of each light source 14, 16 is connected to a splitter 47 providing parts of the optical power emitted by the respective light source at both of its outputs. Via the switches 150 to 156, the optical power provided at these outputs is either blocked or guided to one of the combiners 46 combining parts of the optical power from both light sources. For example, optical power emitted by light source 14 is fed to the transmitting unit 40 if switch 150 is closed. Furthermore, closing switch 152 directs part of the optical power also to the receiving unit 42. Thus, optical power emitted by light source 14 is either selectively directed to the transmitting unit 40 (switch 150 closed) or to the receiving unit 42 (switch 152 closed) or to both of them (switches 150 and 152 closed). Analogously, the same applies to the second light source 16 depending on the positions of the switches 154 and 156. In summary, this setup provides maximum flexibility at the detriment of larger complexity. Part of the power emitted by each of the light sources 14 and 16 can be selectively directed to the transmitting unit 40 or the receiving unit 42, or to both.

The same flexibility can be achieved by replacing the switches 150 to 156 and the splitters 47 by variable or adjustable splitters 48 that are directly connected to the combiners 46 as shown in Fig. 7c. Please note that it would also be possible to use splitters with a fix splitting ratio connected to the laser diodes and to replace the fix combiners 46 by variable combiners with adjustable combining ratio.

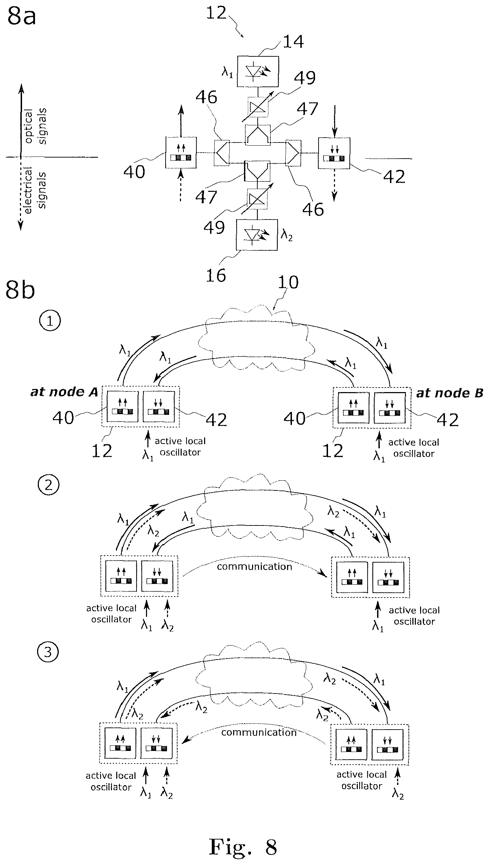

In all scenarios described above, data transmission is symmetrical in the sense that data is always transmitted in both directions on the same wavelength or on the same wavelengths. This symmetry is achieved at the expense of higher complexity of the involved transceiver setups. Fig. 8 shows an embodiment of the transceiver with reduced complexity and a corresponding algorithm for changing the wavelength. Wavelength changes are now performed by turning on the first and second light sources 14, 16.

The setup shown in Fig. 8a is quite similar to the setup of Fig. 7c, but the variable splitters 48 have been replaced by splitters 47 having a fix splitting ratio. Due to the lack of optical components offering tunability or configurability such as switches or variable splitters, this setup provides radiation emitted by one of the first and second light sources 14 and 16 always to both the transmitting unit 40 as well as the receiving unit 42. Fig. 8 shows variable optical attenuators (VOAs) 49 which are optional and might help to reduce time required for the transition from one wavelength to the other one. Those skilled in the art will notice that optical switches might be used instead of the VOAs 49. When using switches or VOAs, the first and second light sources 14, 16, which are typically formed by laser diodes, do not need to be turned on and off. The function of turning on and off the respective wavelength is provided by the optional VOAs or the optional optical switches. Thus, the first and second light sources 14, 16 can always be operated at constant output power and no time is required for stabilizing the wavelength of the emitted lightwaves.

Steps required for changing the wavelength from λ₁ provided by the first light source 14 to λ₂ emitted by the second light source 16 are illustrated in Fig. 8b. It is assumed that the network is configured for transmitting data on both wavelengths and in both directions. For the following considerations it does not matter whether data are transmitted on identical or different paths. Step (1) is the starting situation wherein the first light source 14 is activated in both transceivers 12 and the second light sources 16 are turned off. Thus, data are transmitted in both directions on wavelength λ₁. In step (2), changing the wavelength of the data transmission is initiated by turning on the second light source 16 in transceiver 12 at node A. Thus, both laser sources 14 and 16 are turned on at node A and data are conveyed from node A to node B on both wavelengths λ₁ and λ₂. Furthermore, transceiver 12 at node A is prepared to retrieve data from both wavelengths. However, the transceiver at node B still detects data transmitted on wavelength λ₁ only and solely emits data streams at this wavelength. Thus, data transmission is still based on wavelength λ₁ in both directions. Furthermore, transceiver 12 at node A informs transceiver 12 at node B about the activation of wavelength λ₂. For example, the transceiver at node B gets informed about the activation of wavelength λ₂ by using an information channel between nodes A and B, an information channel relying on the data transmission between the two transceivers, or by the optical signals emitted at node A by transceiver 12 (e.g. decaying λ₁ signal strength or extra λ₂ signal modulation). In a subsequent step (3), transceiver 12 at node B turns on the second light source 16 and simultaneously turns off the first light source 14. In consequence, node B switches its receiver to wavelength λ₂ and transmits data to node A also on this wavelength λ₂. Since the receiving unit 42 at node A has already been prepared to receive signals at this wavelength λ₂, a smooth transition from λ₁ to λ₂ is guaranteed. Thus, data communication has been switched to λ₂ in both directions. Transceiver 12 at node B may communicate this switch-over to transceiver 12 located at node A. In a next step (not shown in Fig 8b), transceiver 12 at node A might turn off its laser source 14 without affecting data transmission.

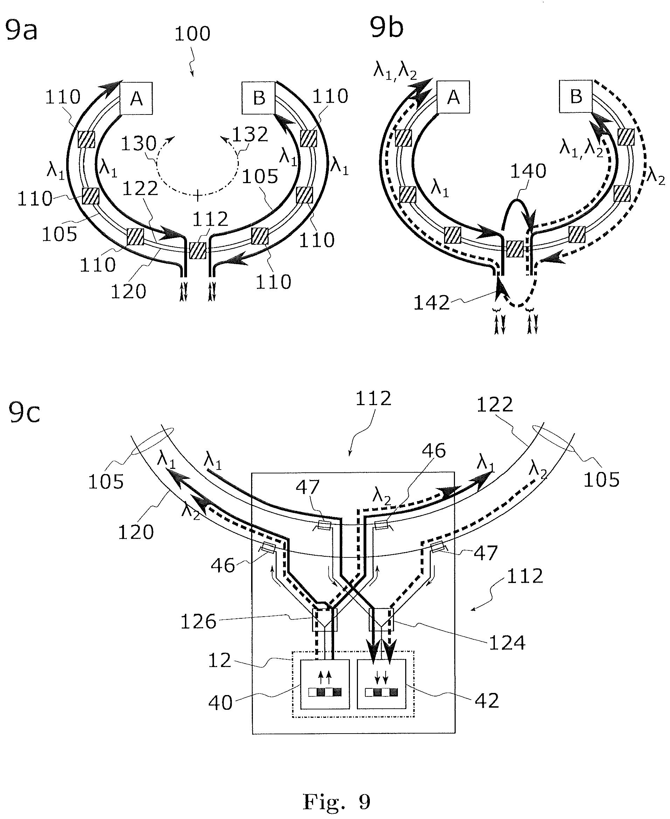

How to use the invention beneficially in an access or metro network 100 with a so-called horse shoe topology is illustrated in Fig. 9. Although the network 100 looks like a ring, it is in fact a linear topology wherein both ends are connected to the network 10 at nodes A and B. Preferably, the connection to the network 100 is established via optical network switches or routers. As shown in Fig. 9a, several intermediate nodes 110, 112 with identical setup are located between the two ends and communicate with the equipment at nodes A and B via a pair of optical fibers 105 consisting of fibers 120 and 122. Within these fibers, lightwaves are propagating in opposite directions. Thus, the network supports bidirectional data transmission between the network 10 and the nodes 110, 112.

Serving as an example for all intermediate nodes, the connection of node 112 to the two end nodes A and B is analyzed in more detail. It is assumed that a segment 130 between node A and node 112 is used as working path for both directions, whereas the remaining segment 132 provides the protection capability. Known solutions use a dedicated wavelength λ₁ for the communication between node 112 and node A in both directions. If this wavelength λ₁ is also used on the protection segment 132, it needs to be avoided that traffic transmitted on the working segment from node A to node 112 leaks into the protection segment from node 112 to node B. Wavelength selective elements are required for extracting the traffic destined for node 112 from the fiber pair 105 and for adding traffic at node 112 to the traffic pair. Wavelength selective elements can be avoided if wavelength λ₂ different from λ₁ is used on the protection segment between node 112 and node B. In any case, a switch needs to be used in front of the receiver in order to distinguish between data signals originating at node A or node B. These requirements render the equipment to be installed at the intermediate nodes and required in larger quantities expensive and limits the reconfigurability of the network. In particular, reassignment of wavelength pairs requires installation work.

These drawbacks are avoided by using the invention, as shown in Fig. 9b. Different pairs of wavelengths are assigned to each of the intermediate nodes for communicating with the end nodes A and B. For example, wavelengths λ₁ and λ₂ are assigned to node 112. The principle behind the application can be summarized as follows: End nodes A and B each send data to node 112 on one wavelength only (node A on wavelength λ₁ and node B on wavelength λ₂). In contrast, node 112 sends data to both end nodes A and B on both wavelengths via different fibers. Thus, the transceiver 12 at node 112 can select the appropriate optical signal just by selecting the local oscillator as for example explained in view of Figs. 3 to 5. No switch or variable optical attenuator is needed for this purpose. When selecting λ₁ for the local oscillator, the working signal emitted by node A and transmitted counter clockwise is received, whereas data is retrieved from the protection signal originating from node B and transmitted clockwise when choosing λ₂ for the local oscillator. Furthermore, no wavelength selective elements need to be used for extracting the optical signals from the fiber pair and for adding optical signals. Assuming that part 140 of the optical signal transmitted from node A to node 112 on wavelength λ₁ leaks into the protection segment from node 112 to node B, two signals are superimposed on the protection segment 132 and wavelength λ₁ becomes unusable. However, node B can tune its local oscillator to receive the optical signal from node 112 on wavelength λ₂. The same considerations apply to clockwise signal propagation in the working segment 130 with part 142 of optical power transferred from segment 132 to segment 130. In this case, wavelength λ₂ cannot be used and node A tunes to wavelength

As already explained above, the setup of the intermediate nodes should provide high flexibility at low complexity. Furthermore, the coupling devices connected directly to the fiber pair 105 should be purely passive. These requirements are met by the setup of node 112 show in Fig. 9c. Optical signals travelling counter clockwise from node A to nodes 112 in the lower fiber 120 or counter clockwise from node B to node 112 in the upper fiber 122 are extracted from the fiber pair by means of splitters 47 having two of its ports connected to the respective fiber. In this way, part of an optical signal arriving at node 112 is directed to the third port of the splitter 47, whereas the other part continues to propagate in the same direction. Signals extracted from the two fibers are combined by a further combiner, which is represented by a y-combiner structure 124 in Fig. 9c. Of course, any other kind of known combiner structure is also suitable for this application. Finally, the combined optical signals are provided to the transceiver 12 having for example a setup according to any of the Figs. 3 to 8. In the receiving unit 42, the optical signal destined for node 112 is received by properly selecting the local oscillator signal as already explained with reference to any of the preceding figures.

Thanks to the reciprocity of passive optical components such as splitters and combiners, the waveguide arrangement (comprising elements 126 and 46) forwarding the two optical signals emitted by the transmitting unit 40 to the two fibers 120 and 122 has the same structure as the waveguide arrangement (comprising elements 124 and 47) directing the optical signals extracted from these fibers to the receiving unit 42. Of course, optical signals are travelling in opposite directions in these arrangement. In detail, the y-structure 126 connected to the output of the transmitting unit 40 operates as a splitter directing parts of the optical signals to the fibers 120 and 122 via combiners 46. The presented setup of node 112 provides full flexibility with respect to potential future reconfiguration since all combiners 46 and splitters 47 connected to the fiber pair 105 have wavelength independent characteristics and do not impose any limitations on the assignment of wavelength pairs to the intermediate nodes 110, 112.

Please note that in all configuration shown in Figs. 1 to 9 the switches can be replaced by variable splitters or combiners.

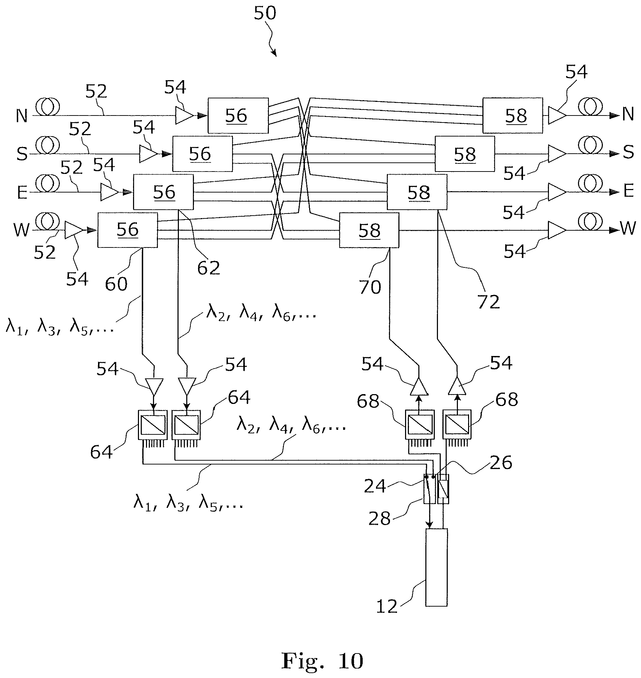

Fig. 10 shows a schematic representation of a ROADM 50 that could be provided at node A and node B of Fig. 1. The ROADM 50 has four inputs 52, for example representing inputs from (from top to bottom) North (N), South (S), East (E), and West (W) directions. Downstream of each input 52, an optical amplifier 54 is provided, followed by a wavelength selective switch 56. The wavelength selective switches 56 allow for switching the incoming optical signals to a selected one of the three directions other than the original direction. For example, the uppermost WSS 56 in Fig. 10, which receives input from the North direction, allows for selectively switching an incoming optical signal to any of the outputs of the South, East and West directions. Prior to be output, signals for certain destiny are combined by WSS 58 and amplified by amplifiers 54.

As further shown in Fig. 10, the lowermost WSS 56 receiving signals from the West has a drop port 60 and the second lowest WSS 56 has a drop port 62, the drop port 60 for dropping first optical signals with first wavelengths λ₁, λ₃, λ₅,... and the drop port 62 for dropping second optical signals with second wavelengths λ₂, λ₄, λ_{6 ...}. The first and second optical signals dropped at the drop ports 60, 62 are amplified by amplifiers 54 and are then split by a corresponding splitter 64, such that at each output of the left splitter 64, all of the first optical signals at said first wavelengths λ₁, λ₃, λ₅, ... and at each output of the right splitter 64, all of the second optical signals at said second wavelengths λ₂, λ₄, λ_{6 ...} are present. One of the outputs of the left splitter 64 is connected with the first input 24 of the switch 28 of the transceiver 12 shown in Fig. 1 and 2, while one of the outputs of the right splitter 64 is connected with the second input 26 of the switch 28. The remaining outputs of the splitters 64 are similarly connected to additional transceivers of the same type not shown for simplicity.

In the first configuration of the switch 28, all of the first optical signals at wavelengths λ₁, λ₃, λ₅ ... are simultaneously combined with the first and second local oscillator signals at λ₁ and λ₂ on the first and second pairs of balanced photodiodes 30a, 30b (see Fig. 2). Since the only frequency match between the local oscillator signals and the incoming optical signals is at λ₁, only the first optical signal is coherently received. When switching the switch 28 to the second configuration, the second optical signals at wavelengths λ₂, λ₄, λ₆ ... at the second input 26 of the switch 28 are fed to the first and second pairs of balanced photodiodes 30a, 30b and are superposed again with the first and second local oscillator signals at wavelengths λ₁ and λ₂. In this case, the only frequency match is at λ₂, such that the second optical signal is coherently received.

As is further shown in Fig. 10, first and second optical signals generated by the transceiver 12 at wavelengths λ₁, λ₂ to be transmitted in opposite direction are fed through a 2 port splitter, the combiners 68, amplifiers 54 and add port 70 for direction west and add port 72 for direction east.

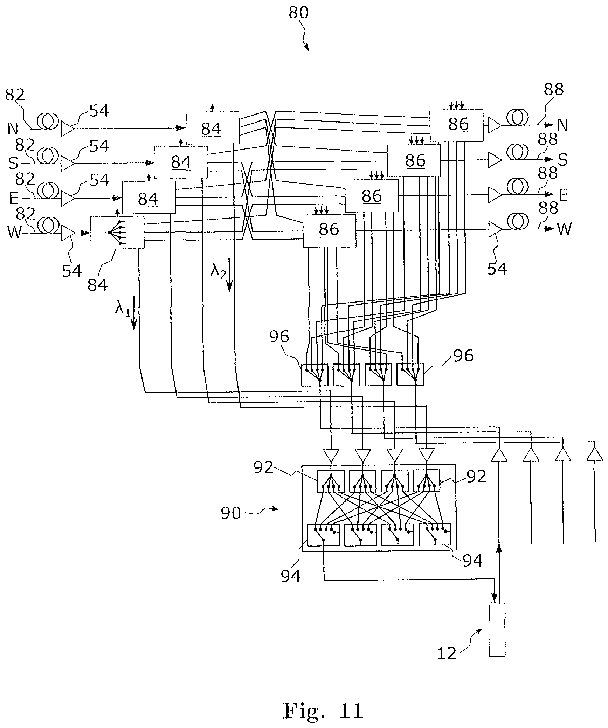

In Fig. 11, a further ROADM 80 is illustrated. It has architecture similar to a ROADM as shown in Fig. 3 of WO2016/030255. The ROADM 80 has four inputs 82 for receiving optical signals from different directions, such as North (N), South (S), East (E), and West (W). After amplification by amplifiers 54, the incoming signals are split by splitters 84. Each of the splitters 84 has three outputs for directing the incoming signals to each of the three output directions other than the input direction. In other words, if the input signal is from the North, the splitter 84 provides these signals to the outputs 88 associated with the South, East and West directions, and so forth. The outputs of the splitters 84 are connected with WSS 86.

Further, the ROADM 80 comprises a switching arrangement 90 which comprises four splitters 92, each having one input which is connected with an output of a corresponding one of the four splitters 84, and four outputs. The switching arrangement 90 further comprises four switches 94 having one output and four inputs each, which inputs are respectively connected with an output of a corresponding one of the splitters 92.

The output of the leftmost switch 94 in the switching arrangement 90 of Fig. 11 is connected with a corresponding transceiver 12 of a type shown in one of Fig. 1 or 2, except that in this case the additional switch 28 for selecting the first or second incoming optical signal can be omitted, this switching being provided by the switching arrangement 90 of the ROADM 80. Again, further similar transceivers 12 will be provided (not shown), which would be connected to the outputs of the other switches 94. The number of switches 94 hence corresponds to the number of transceivers 12 to be served, and this number is of course not limited to four. Moreover, the number of outputs of the splitters 92 will correspond to the number of switches 94 and is hence likewise not limited to four. Splitters 96 and optional amplifiers are provided for adding the first and second optical signals at wavelengths λ₁ and λ₂ at the ROADM 80. In more detail, the transmit port of the transceiver 12 is connected via an (optional) amplifier to a splitter 96, which is connected to at least two output WSS 86 and (optional) subsequent amplifiers 54.

For illustrating the operation of the ROADM 80 of Fig. 11, let it be assumed that a first optical signal at λ₁ is incoming to the ROADM 80 from the West, and a second optical signal at λ₂ is incoming to the ROADM 80 from the North. The first optical signal at λ₁ enters the input of the leftmost splitter 92 in the switching arrangement 90, and the second optical signal at λ₂ enters the input of the rightmost splitter 92 in the switching arrangement 90. Depending on the switching configuration of the leftmost switch 94, the first or second optical signal is selectively provided to the transceiver 12.

Although preferred exemplary embodiments are shown and specified in detail in the drawings and the preceding specification, these should be viewed as purely exemplary and not as limiting the invention. It is noted in this regard that only the preferred exemplary embodiments are shown and specified, and all variations and modifications should be protected that presently or in the future lie within the scope of protection of the invention as defined in the appended claims.

### Reference Signs

- 10: optical network
- 12: transceiver
- 14: first light source
- 16: second light source
- 18: I-Q modulator
- 20: first drop port
- 22: second drop port
- 24: first input of optical switch 28
- 26: second input of optical switch 28
- 27: switch
- 28: optical switch
- 29: coherent IQ receiver
- 30a: first pair of balanced photodiodes
- 30b: second pair of balanced photodiodes
- 31: tunable optical bandpass filter
- 32: electronic receiver circuit
- 34: coupler
- 36: phase shifter
- 38: tunable local oscillator
- 40: transmitting unit
- 42: receiving unit
- 46: combiner
- 47: splitter
- 48: variable splitter
- 49: variable optical attenuator
- 50: ROADM
- 52: input to ROADM 50
- 54: optical amplifier
- 56: wavelength selective switch
- 58: wavelength selective switch
- 60: first drop port
- 62: second drop port
- 64: splitter
- 68: combiner
- 70: first add port
- 72: second add port
- 80: ROADM
- 82: input to ROADM 80
- 84: splitter
- 86: wavelength selective switch
- 88: output of ROADM 80
- 90: switching arrangement
- 92: splitter
- 94: switch
- 96: splitter
- 100: access or metro network with horse shoe topology
- 105: fiber pair
- 110: intermediate node
- 112: intermediate node (OADM)
- 120: first fiber
- 122: second fiber
- 124: combiner
- 126: splitter
- 130: working segment
- 132: protection segment
- 140: part of optical power
- 142: part of optical power
- 150: switch
- 152: switch
- 154: switch
- 156: switch

## Claims

1. A method of transmitting data in an optical network (10, 100) from a first location to a second location, comprising the following steps:
modulating a same data signal on first and second carriers having first and second wavelengths, respectively, to generate first and second optical signals carrying the same information,
transmitting said first and second optical signals from said first location to said second location through said optical network,
coherent receiving of a selected one of said first and second optical signals by means of a coherent receiver (29) located at said second location, wherein said coherent receiving comprises the following steps:
• receiving a selected one or both of said first and second optical signals on a photodetector (30a, 30b),
• providing, by means of a local oscillator arrangement (34, 38) optically connected with said photodetector (30a, 30b),
(i) a selected one of a first local oscillator signal having a wavelength corresponding to said first wavelength and a second local oscillator signal having a wavelength corresponding to said second wavelength, in case both of said first and second optical signals are received on said photodetector, or
(ii) both of said first and second local oscillator signals in case a selected one of said first and second optical signals is received on said photodetector; and
• processing the output signal of said photodetector by means of an electronic receiver circuit (32) connected to said photodetector (30a, 30b).

2. The method of claim 1, wherein said first and second optical signals are transmitted from said first location to said second location along different optical paths,
wherein said first optical signal is preferably used for data transmission and the second optical signal is used as a protection channel, or
wherein said first and second optical signals are transmitted from said first location to said second location along the same optical path,
wherein said first and second optical signals are preferably simultaneously transmitted during the course of a switch-over time for changing the wavelength for a certain channel while remaining on the optical path, or while changing the wavelength for a certain channel along with changing the optical path, and/or
wherein one of said first and second optical signals is selected to be received by said photodetector (30a, 30b) by means of an optical switch (28).

3. The method of one of the preceding claims, wherein said first and second local oscillator signals are simultaneously provided, thereby allowing for coherent receiving of said data signal irrespective of whether the first or second optical signal is selected to be received at the photodetector (30a, 30b),or
wherein said first and second optical signals are simultaneously received by said photodetector (30a, 30b),and a selected one of said first and second local oscillator signals is provided for coherent receiving of the corresponding optical signal.

4. The method of one of the preceding claims, further comprising the steps of
• generating, at said second location, third and fourth carriers having said first and second wavelength, respectively,
• modulating a same data signal on said third and fourth carriers, to generate third and fourth optical signals carrying the same information, and
• transmitting said third and fourth optical signals from said second location to said first location through said optical network, or
wherein said first and second local oscillator signals are preferably branched off from said third and fourth carriers, respectively.

5. The method of one of the preceding claims, further comprising a step of dropping said
first and second optical signals at an optical add-drop multiplexer (OADM) (50, 80) located at said second location,
wherein the method preferably further comprises a step of adding said third and fourth optical signals at said OADM (50, 80).

6. The method of one of claims 1 to 4, wherein said optical network 100 has a horseshoe topology comprising first and second end nodes (A, B) located at said first location, and at least one intermediate node (112) located at said second location,
wherein said intermediate node (112) is connected via a first network segment (130) with said first end node (A) and via a second network segment (132) with said second end node B,
wherein each of said first and second network segments (130, 132) comprises a pair of optical fibers (120, 122) for bidirectional signal transmission, and
wherein said first optical signal is transmitted from said first end node (A) at said first location to said intermediate node (112) at said second location via said first network segment (130), and wherein said second optical signal is transmitted from said second end node (B) at said first location to said intermediate node (112) at said second location via said second network segment (132).

7. The method of claims 4 and 6, wherein said third optical signal is split into first and second components,
wherein said first component of said third optical signal is transmitted from said intermediate node (112) at said second location via said first network segment (130) to said first end node (A) at said first location, and
wherein said second component of said third optical signal is transmitted from said intermediate node (112) at said second location via said second network segment (132) to said second end node (B) at said first location,
wherein preferably said fourth optical signal is split into first and second components, wherein said first component of said fourth optical signal is transmitted from said intermediate node (112) at said second location via said first network segment (130) to said first end node (A) at said first location, and
wherein said second component of said fourth optical signal is transmitted from said intermediate node (112) at said second location via said second network segment (132) to said second end node (B) at said first location.

8. The method of one of claims 6 or 7, wherein said optical network (100) comprises one or more further intermediate nodes (110) located within one of the first and second network segments (130, 32), and wherein said method further comprises transmitting a corresponding a fifth optical signal from said first end node (A) to said at least one further intermediate node (110) and transmitting a corresponding sixth optical signal from said second end node (B) to said at least one further intermediate node (110), wherein said corresponding fifth and sixth optical signals carry the same information but have corresponding third and fourth carrier wavelengths different from each other and from said first and second wavelengths.

9. The method of claim 8, wherein said optical network (100) comprises one or more further intermediate nodes (110) located within one of the first and second network segments (130, 132), and wherein said method further comprises:
splitting a corresponding seventh optical signal into first and second components and
transmitting said first component of said corresponding seventh optical signal from said further intermediate node (110) to said first end node (A) and transmitting said second component of said corresponding seventh optical signal from said further intermediate node (110) to said second end node (B),
splitting a corresponding eighth optical signal into first and second components and
transmitting said first component of said corresponding eighth optical signal from said further intermediate node (110) to said first end node (A) and transmitting said second component of said corresponding eighth optical signal from said further intermediate node (110) to said second end node (B),
wherein said corresponding seventh and eighth optical signals carry the same information, and wherein said corresponding seventh and eighth optical signals have the corresponding third and fourth carrier wavelengths, respectively.

10. The method of claim 8 or 9, wherein said optical network (100) comprises at least two further intermediate nodes (110) located within one of said first and second network segments 130, 132), wherein each of the corresponding third and fourth carrier wavelengths associated with each of said at least two further intermediate nodes (110) are different from each other.

11. A method of transmitting data in an optical network (10, 100) from a first location to a second location, comprising the following steps:
generating an optical signal by either
(i) modulating a data signal on a selected one of first and second carriers having first and second wavelengths, respectively, or
(ii) modulating a same data signal on first and second carriers having first and second wavelengths, respectively, to generate first and second optical signals carrying the same information, and selecting one of said first and second optical signals as said optical signal,
transmitting said optical signal from said first location to said second location through said optical network,
coherent receiving of said optical signal by means of a coherent receiver (29) located at said second location, wherein said coherent receiving comprises the following steps:
• receiving said optical signal on a photodetector (30a, 30b),
• providing, by means of a local oscillator arrangement (34, 38) optically connected with said photodetector (30a, 30b),both of a first local oscillator signal having a wavelength corresponding to said first wavelength and a second local oscillator signal having a wavelength corresponding to said second wavelength, and
• processing the output signal of said photodetector by means of an electronic receiver circuit (32) connected to said photodetector (30a, 30b).

12. A receiver unit (29) for coherent receiving a selected one of a first and a second optical signal having first and second wavelengths, respectively, said first and second optical signals carrying a same data signal, said receiver unit comprising
• a photodetector (30a, 30b) arranged to receive a selected one or both of said first and second optical signals,
• a local oscillator arrangement (34, 38) optically connected with said photodetector (30a, 30b) and configured to provide a selected one or both of a first local oscillator signal for coherent receiving of said first optical signal and a second local oscillator signal for coherent receiving of said second optical signal, and
• an electronic receiver circuit (32) connected to said photodetector (30a, 30b).

13. The receiver unit (29) of claim 12, further comprising an optical switch (28) for selecting one of said first and second optical signals to be received by said photodetector (30a, 30b), and/or
wherein said local oscillator arrangement (34) is configured for simultaneously providing said first and second local oscillator signals, thereby allowing for coherent receiving said data signal irrespectively of whether the first or the second optical signal is selected to be received at the photodetector (30a, 30b), or
wherein the receiver unit (29) is configured for simultaneously receiving said first and second optical signals by said photodetector, wherein said local oscillator arrangement (38) is configured for providing a selected one of said first and second local oscillator signals for coherent receiving of the corresponding optical signal, and/or
wherein said receiver unit (29) is coupled with a reconfigurable optical add-drop multiplexer (ROADM) (50, 80), said ROADM (50, 80) being configured for dropping said first and second optical signals.

14. A transceiver (12) comprising
• a receiver unit (29) according to one of claims 12 or 13,
• light sources (14, 16) for generating, third and fourth carriers having said first and second wavelength, respectively, and
• a modulator (18) for modulating a same data signal on said third and fourth carriers, to generate third and fourth optical signals carrying the same information.

15. The transceiver (12) of claim 14, in which the local oscillator arrangement is formed by a coupler (34) for branching off a portion of said third and fourth carriers and providing it to the photodetector (30a, 30b), and/or
wherein said transceiver (12) is coupled with a reconfigurable optical add-drop multiplexer (ROADM) (50, 80), said ROADM (50, 80) being configured for dropping said first and second optical signals to be received by the receiving unit (29) of said transceiver (12), wherein said transceiver (12) and said ROADM (50, 80) are configured for adding said third and fourth optical signals at said ROADM (50, 80).
